# EUROPÄISCHE PATENTSCHRIFT

(11) **EP 1 361 489 B1**
(45) Veröffentlichungstag und Bekanntmachung des Hinweises auf die Patenterteilung: **12.04.2006**
(21) Anmeldenummer: 03003741.0
(22) Anmeldetag: 19.02.2003
(51) Int. Cl.: G05B 23/02

(54) **Verfahren und Vorrichtung zum Überwachen des Verhaltens von Maschinen und Maschinenanlagen**
Method and device for montiroing the behaviour of machines and machine installations
Procédé et dispositif de surveillance du comportement de machines et des installations de machines

(30) Priorität: 08.05.2002 DE 10220412
(43) Veröffentlichungstag der Anmeldung: 12.11.2003
(73) Patentinhaber: Institut für Sicherheitstechnologie (ISTEC) GmbH, 85748 Garching (DE)
(72) Erfinder: Kolbasseff, Alexander, 83527 Haag i. Obb (DE); Sunder, Reinhold, 85778 Haimhausen (DE); Kieninger, Kurt, 81827 München (DE); Röhm, Andreas, 85764 Oberschleissheim (DE)
(74) Vertreter: COHAUSZ DAWIDOWICZ HANNIG & SOZIEN

(56) Entgegenhaltungen:
- EP-A- 1 022 631
- WO-A-01/09694
- WO-A-01/63371
- DE-A- 10 163 148
- DE-A- 19 740 974

## Beschreibung

Die Erfindung betrifft ein Verfahren und eine Vorrichtung zum Überwachen des Verhaltens von stationären Maschinen und Maschinenanlagen, insbesondere von Kraftwerken und Windkraftanlagen, und der Diagnose von Komponenten von Maschinen und Maschinenanlagen, wobei gleiche und/oder unterschiedliche Betriebsparameter (Messsignale) der Maschine/Maschinenanlage beziehungsweise von Komponenten der Maschine/Maschinenanlage während deren Einsatz erfasst und ausgewertet werden.

Bekannt ist, das Verhalten von Maschinen während deren bestimmungsgemäßem Einsatz zu überwachen, indem das Verhalten repräsentierende Betriebsparameter der Maschinen erfasst und ausgewertet werden. Unter dem Begriff "Maschine" werden bei dieser Anmeldung Arbeitsmaschinen und Kraftmaschinen sowie Maschinenanlagen mit zu überwachenden Teilen, Komponenten und angeschlossenen Maschinen verstanden.

EP 1 022 631 A2 offenbart ein hierarchisches Diagnosesystem einer Produktionsstraße.

DE 197 40 974 A1 offenbart ein Buchfertigungssystem umfassend eine Buchfertigungsstraße mit mehreren Fertigungsmaschinen, Sensoren zur Überwachung und Aktoren zur Einstellung von Maschinenparametern, Anzeigevorrichtungen, Eingabevorrichtungen sowie Rechner, mittels der programmgesteuert Auftragsdaten verarbeitet, Einrichtungsmaßnahmen durchgeführt und Maschinenprozesse überwacht werden.

Die nachveröffentlichte Druckschrift DE 101 63 148 A1 offenbart ein Verfahren und eine Vorrichtung zum Überwachen des Fahrverhaltens von Schienenfahrzeugen und die Diagnose von Komponenten von Schienenfahrzeugen, wobei gleiche und / oder unterschiedliche Betriebsparameter (Messsignale) des Schienenfahrzeuges beziehungsweise von Komponenten des Schienenfahrzeuges während dessen bestimmungsgemäßen Einsatzes erfasst und ausgewertet werden, wobei in Abhängigkeit der Zuordnung zu Überwachungsebenen einer Überwachungshierarchie, zur Erzielung das Fahrverhalten charakterisierender, ereignisabhängiger Aussagen, die Betriebsparameter (Messsignale) wenigstens einer Überwachungsebene zugeführt werden, wobei je nach Zuordnung zu einer der Überwachungsebenen die Betriebsparameter (Messsignale) in den Überwachungsebenen gleichen und/oder unterschiedlichen Auswertealgorithmen unterzogen werden.

Aufgrund unvorhergesehener äußerer und/oder innerer Einflüsse kann es zu einer Veränderung des Verhaltens einzelner Komponenten kommen, die dann zu einer entsprechenden Signalauslösung führen. Oftmals sind diese äußeren und inneren Einflüsse nicht identisch mit den eigentlich zu überwachenden Ereignissen, beispielsweise Schäden an einzelnen Komponenten, so dass bei den bekannten Überwachungsverfahren Fehlalarme nicht ausgeschlossen werden können. Aus Gründen der Systemakzeptanz muss jedoch jedem Alarm die maximal mögliche Bedeutung beigemessen werden, so dass hierdurch das Betriebsverhalten der Maschinen entsprechend der Anzahl von Fehlalarmierungen beeinträchtigt ist

Der Erfindung liegt die Aufgabe zugrunde, ein Verfahren und eine Vorrichtung der gattungsgemäßen Art zu schaffen, mittels denen eine sichtbare Überwachung des Verhaltens von stationären Maschinen bei minimaler Fehlalarmauslösung möglich ist.

Erfindungsgemäß wird diese Aufgabe durch ein Verfahren mit den im Anspruch 1 und eine Vorrichtung mit den im Anspruch 14 genannten Merkmalen gelöst.

Dadurch, dass in Abhängigkeit der Zuordnung zu Überwachungsebenen einer Überwachungshierarchie, zur Erzielung des Verhaltens charakterisierender, ereignisabhängiger Aussagen, die Betriebsparameter (Messsignale) wenigstens einer Überwachungsebene zugeführt werden, wobei je nach Zuordnung zu einer der Überwachungsebenen die Betriebsparameter (Messsignale) in den Überwachungsebenen gleichen und/oder unterschiedlichen Auswertealgorithmen unterzogen werden, ist vorteilhaft möglich, eine optimierte Überwachung und Diagnose der Maschine durchzuführen.

Es ist insbesondere möglich, durch die gegebenen Kombinationsmöglichkeiten der Auswahl der einzelnen Betriebsparameter (Messsignale) beziehungsweise der unterschiedlichen Kombinationsmöglichkeiten hinsichtlich der Zuordnung zu den Überwachungsebenen - und damit der Auswahl der Auswertealgorithmen - sich anbahnende Schadensentwicklungen deutlich vor Erreichen kritischer Zustände zu erkennen und somit den sich hieraus ergebenden Zeitgewinn einerseits zur Einleitung von Gegenmaßnahmen und andererseits zur Selbstüberprüfung hinsichtlich des Ausschlusses von Fehlalarmen zu nutzen. In den unterschiedlichen Überwachungsebenen können hierbei gleiche Auswertealgorithmen und/oder unterschiedliche Auswertealgorithmen, beispielsweise im Frequenzbereich und/oder Zeitbereich und/oder im Statistikbereich, zum Einsatz kommen.

insbesondere ist auch erfindungswesentlich, dass die den unterschiedlichen Betriebsparametern entsprechenden Signale in den unterschiedlichen Überwachungsebenen gegebenenfalls unterschiedlichen Auswertealgorithmen unterworfen werden können. Hierdurch kann eine Anpassung der Auswertung der Signale an die unterschiedlichen Überwachungsebenen in einfacher Weise erfolgen, wobei entsprechend einer notwendigen Reaktionszeit zur Erkennung relevanter Ereignisse entsprechend optimale Auswertealgorithmen herangezogen werden. Es ist insbesondere auch möglich, wenigstens zwei Betriebsparameter (Messsignale), die gleich oder unterschiedlich sein können, innerhalb einer Überwachungsebene miteinander zu verknüpfen.

Bevorzugte Ausgestaltungen der Erfindung ergeben sich aus den in den Unteransprüchen genannten Merkmalen.

Die Erfindung wird nachfolgend an Ausführungsbeispielen anhand der zugehörigen Zeichnungen näher erläutert. Es zeigen:
- Figur 1: schematisch ein Überwachungssystem einer Maschine;
- Figuren 2 bis 5: Blockschaltbilder der Signalverarbeitung innerhalb einzelner Überwachungsebenen des Überwachungssystems;
- Figur 6: ein Gesamtblockschaltbild der Signalverarbeitungspfade und
- Figur 7: schematisch den Datenfluss im Überwachungssystem

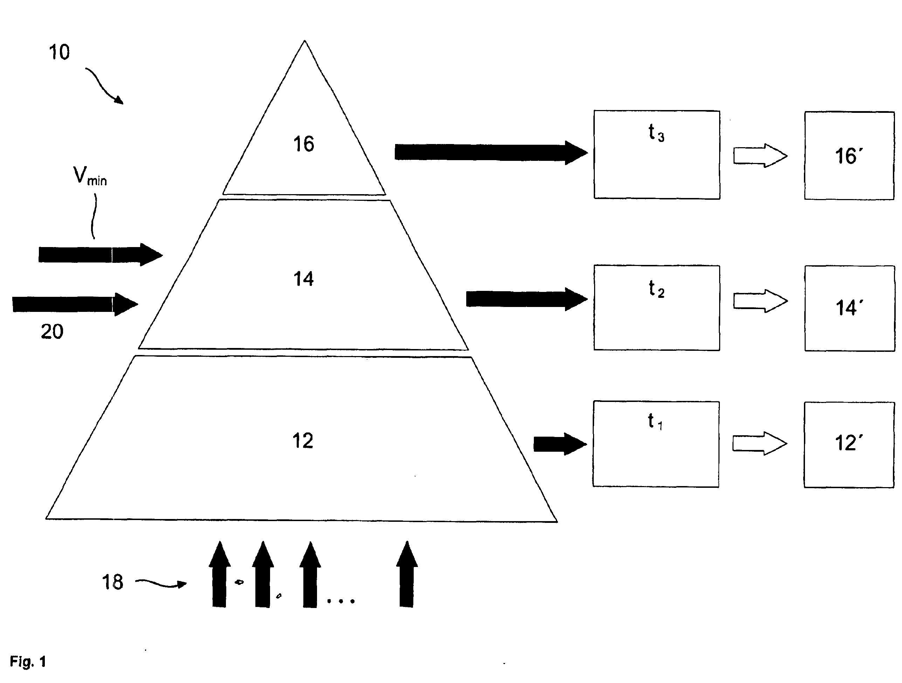

Figur 1 zeigt schematisch ein Überwachungssystem 10 für eine Maschine.
Bei der M.= Maschine kann es sich beispielsweise um eine Arbeitsmaschine oder um eine Kraftmaschine wie einen Motor oder eine Turbine insbesondere eines Kraftwerkes oder einer Windkraftanlage handeln.

Das Überwachungssystem 10 umfasst drei Überwachungsebenen 12, 14, und 16. Die Überwachungsebenen 12, 14 und 16 bauen hierarchisch aufeinander auf. Die erste Überwachungsebene 12 beinhaltet allgemeine Diagnosen zur Erfassung von Schäden, Fehlern oder dergleichen im Anfangsstadium, die im Rahmen von Wartungen, Reparaturen und/oder Instandhaltungen zeitlich unkritisch behoben werden können.

In der Überwachungsebene 14 werden fortgeschrittene Schäden und/oder Fehler erkannt, die gegebenenfalls zu gefährlichen Situationen führen können.

Die Überwachungsebene 16 beinhaltet einen sogenannten Aggregateschutz, der beispielsweise das Festlaufen eines Lagers erkennt, wobei hierbei der Extremfall, d.h. z. B. der Crash einer Maschine, eingeschlossen ist.

Dem Überwachungssystem 10 werden hier insgesamt mit 18 bezeichnete Signale zur Verfügung gestellt. Die Signale 18 werden unter anderem von an einzelnen Komponenten der Maschine angeordneten Sensoren geliefert.
Die Signale 18 umfassen femer eine Ist-Drehzahl der Maschine, eine Laufleistung der Maschine und Temperatursignale, die z.B. proportional gemessene Lagertemperaturen sind. Gegebenenfalls können dem Überwachungssystem auch weitere physikalische Größen, die Betriebsparameter der Maschine charakterisieren, zugeführt werden. Die Signale 18 stellen somit allesamt momentane dynamische Messgrößen der überwachten Maschine dar.

In jeder Überwachungsebene 12, 14 und 16 werden die dem Überwachungssystem 10 zugeführten Signale 18 unterschiedlichen Auswertealgorithmen unterzogen. Dies betrifft sowohl die Art der Auswertung als auch die Zeitspanne der Auswertung. Hierauf wird im Einzelnen anhand der nachfolgenden Figuren noch näher eingegangen. Die Auswertung der Signale 18 erfolgt dahingehend, ob den Überwachungsebenen 12, 14 oder 16 zuzuordnende Ereignisse erkannt werden. In der unkritischsten Überwachungsebene 12 ist beispielsweise eine Verarbeitungszeit bis zu einer Zeitspanne t₁ von beispielsweise 300 s vorgesehen. Bei Erkennen eines relevanten Ereignisses in der Überwachungsebene 12, erfolgt eine Meldung 12' an die Instandhaltung oder dergleichen. Die Meldung 12' kann beispielsweise mittels Datenfernübertragung abgesetzt werden.

In der Überwachungsebene 14 erfolgt die Bearbeitung der Signale 18 mit einer Verarbeitungszeitspanne t₂, die beispielsweise bis 30 s beträgt. Aufgrund der der Überwachungsebene 14 zuzuordnenden kritischeren Schadensentwicklung ist hier die Verarbeitungszeit schneller. Bei Erkennen eines der Übeniwachungsebene 14 zuzuordnenden Ereignisses erfolgt eine Meldung 14', die beispielsweise bis 0,1 s beträgt. Wird ein der Überwachungsebene 16 zuzuordnendes Ereignis erkannt, erfolgt eine Meldung 16', die direkt oder indirekt einen Eingriff in den Betrieb der Maschine, beispielsweise ein Abschalten oder dergleichen, auslöst.

Es wird deutlich, dass aufgrund unterschiedlicher Schadenseskalationsgrade entsprechend der Überwachungsebenen 12, 14, 16 gestaffelte Meldungen 12', 14' beziehungweise 16' vorgesehen sind. Während die der Überwachungsebene 12 zuzuordnenden Ereignisse zeitlich unkritisch sind, führen der Überwachungsebene 14 zuzuordnende Ereignisse unmittelbar zu Meldungen an ein internes Kommunikationsnetz mit eventuellen Vorschlägen für durch das Personal einzuleitende Gegenmaßnahmen. Die Meldungen 16' hingegen lösen sofortige Gegenmaßnahmen aus.

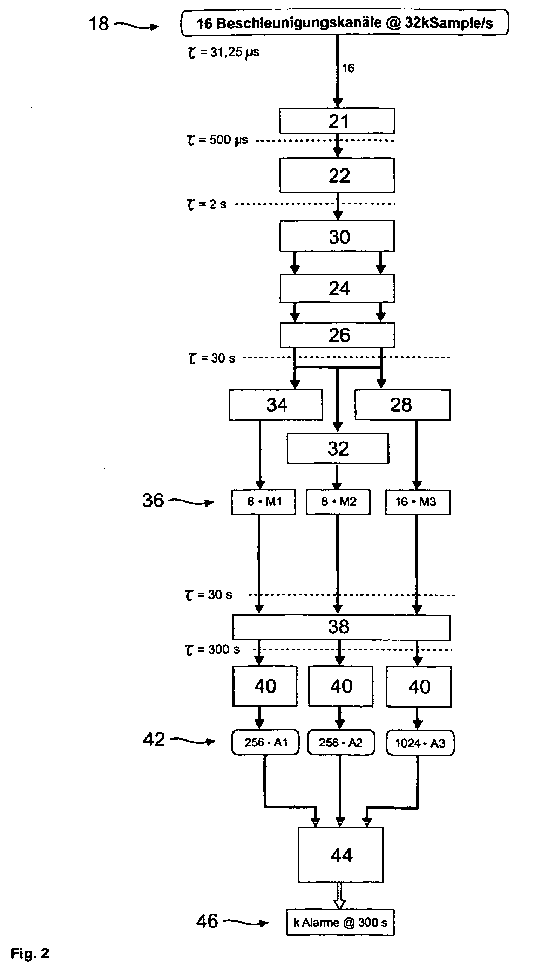

Dem Überwachungssystem 10 werden noch Steuer- beziehungsweise Führungsgrößen zugeführt, die beispielsweise eine Mindestarbeitsgeschwindigkeit vₘᵢₙ der Maschine und ein Verknüpfungsalgorithmus 20 (Verknüpfungslogiken 44, 68, 82, Figuren 2 bis 6) der Signale 18 entsprechend der Verarbeitung der Signale in den einzelnen Überwachungsebenen 12, 14 beziehungsweise 16 vorgeben.

Hinsichtlich der in den einzelnen Überwachungsebenen 12, 14 und 16 anzuwendenden Auswertealgorithmen ist Folgendes festzuhalten. In der Überwachungsebene 12 zur Einleitung von Wartungsmaßnahmen sind Verfahren im Frequenzbereich zielführend. Diese besitzen aufgrund der durch Mittelungsprozeduren verbesserten Signalstatistik das Potential, Eigenfrequenzen von Teilen der Maschine und der Maschine selber im Betrieb zu verfolgen und schädigungs- oder verschleißbedingte Veränderungen frühzeitig zu erkennen. Die von außen herrührenden Anregungseinflüsse stören dabei die Erkennung und Beurteilung der Frequenzlage nicht.

Für die Erkennung von gefährlichen Situationen in der Überwachungsebene 14 werden beispielsweise statistische Verfahren eingesetzt, die insbesondere bei periodisch auftretenden Stoßimpulsen Aussagen zu Fehlern liefern. Mittels dieser Auswertealgorithmen können eskalierende Entwicklungen kurzfristig erkannt werden, um entsprechende Gegenmaßnahmen einzuleiten (Meldung 14').

Die in der Überwachungsebene 16 eingesetzten Auswertealgorithmen sind in der Lage, spontan eintretende Ausfälle zu detektieren. Hierbei werden Zeitreihenanalysen (Histogrammanalysen) in verschiedenen Arbeitsgeschwindigkeitsklassen durchgeführt.

Figur 2 zeigt in einem Blockschaltbild die Auswertealgorithmen der Signale 18 in der Überwachungsebene 12. Als Ausgangssignale liegen sechszehn Beschleunigungssignale einzelner Komponenten der Maschine vor. Dies können beispielsweise Beschleunigungssignale oder dergleichen sein. Die Beschleunigungskanäle werden mit einer Abtastrate eingelesen, die an die höchste interessierende Frequenz bei der Zeitverarbeitung angepasst ist, zum Beispiel 32 kHz. Anschließend werden sie digital gefiltert und downgesampelt (Schritt 12). Hierdurch wird das Frequenzband begrenzt und der Rechenaufwand für die Auswertealgorithmen minimiert. Anschließend erfolgt die Bewertung mit einem Hannig-Fenster (Schritt 22), um Verzerrrungen im Frequenzbereich zu reduzieren. Anschließend werden mittels einer Spektralanalyse 22 die Amplituden- und Phasenspektren der Signale ermittelt. Dies erfolgt beispielsweise mittels einer Fast-Fourier-Transformation (FFT) mit einer Auflösung von 0.5 Hz. Dies führt bei einem interessierenden Frequenzbereich von 0 bis 1024 Hz zu 4096 erforderlichen Stützstellen für die Fast-Fourier-Transformation, so dass sich ein Erfassungsfenster von 2 s (4096 Stützstellen durch fₛₐₘₚₗₑ = 2 s) für eine Einzel-Fast-Fourier- Tranformation ergibt. Über einen Zeitraum von 20 s werden Einzelspektren im Zeitbereich überlappend generiert, beispielsweise mit einem Überlappungsgrad von 50%, so dass die Anzahl der zu ermittelnden Einzelspektren neunzehn beträgt. Dieser Vorgang wird mit einem Erfassungstakt von 30 s neu gestartet. Der Überlappungsgrad der Einzelspektren kann hierbei, beispielsweise abweichend von den vorzugsweise 50%, in den Grenzen zwischen 30% bis 70% variiert werden. Im Ergebnis der Spektralanalyse 22 stehen für die Kanäle 16 jeweils zum Beispiel neunzehn Spektren zur Verfügung, von denen durch geeignete Kombination (Schritt 30) die spektralen Auto- und Kreuzleistungen bestimmt (Schritt 24) und anschließend gemittelt (Schritt 26) werden. Auf Basis der Kreuzleistungen werden die gemittelten Phasenspektren 34 bestimmt. Auf Basis der Auto- und Kreuzleistungen werden gemittelte Kohärenzspektren 32 bestimmt Im Ergebnis dieser Auswertung stehen somit acht Merkmale M₁ (entspricht den Kohärenzspektren 32), acht Merkmale M₂ (entspricht den Phasenspektren 34) und sechszehn Merkmale M₃ (entspricht den Amplitudenspektren 28) zur Verfügung. Somit stehen insgesamt zweiunddreißig Merkmale 36 (8 x M₁ + 8 x M₂ + 16 x M₃) zur Verfügung.

Die Spektren 28, 32 und 34 werden über einen Zeitraum von beispielsweise 120 s (oder wahlweise 180 s, 240 s, 300 s oder 360 s) ermittelt und zwischendurch gespeichert. Die Arbeitsgeschwindigkeit v der Maschine wird einmal zu Beginn und einmal zum Ende eines jeden 20 s-Erfassungsfensters gemessen und ebenfalls zwischengespeichert. Eine möglichst geringe Geschwindigkeitsveränderung wird als Kriterium für eine endgültige Archivierung eines aus dem eingestellten Zeitfenster stammenden Spektrums verwendet.

Über eine Auswahlschaltung 38 können innerhalb der vorliegenden Amplitudenspektren 28. Phasenspektren 34 und Kohärenzspektren 32 durch Definition unterer und oberer Bandgrenzen zu überwachende Frequenzbänder (Überwachungsbänder) definiert werden. Innerhalb dieser definierten Frequenzbänder erfolgt eine Auswertung hinsichtlich verschiedener Parameter. Zunächst wird die Frequenz des Maximums (Peak) innerhalb des Frequenzbandes ermittelt. Anschließend wird geprüft, ob der Peak innerhalb der oberen und unteren Frequenzgrenze liegt (Parameter 1 und 2). Verlässt der Peak diesen Frequenzbereich, so wird ein Alarmbit gesetzt. Der Amplitudenwert des Peaks muss innerhalb der definierten Amplitudengrenze liegen (Parameter 3 und 4). Wird der durch die obere und die untere Amplitudengrenze eingestellte Bereich verlassen, so wird ebenfalls ein Alarmbit gesetzt. Im Amplitudenspektrum wird auch der-3dB-Punkt überwacht. Dies ist die Frequenzlinie, die in ihrer Amplitude um 3 dB über dem Peak gedämpft ist. Dieser -3dB-Punkt tritt im Spektrum sowohl links als auch rechts vom Peak auf. Für beide 3dB-Punkte lassen sich die untere und die obere Frequenzgrenze einstellen (Parameter 5 bis 8). Hierdurch wird eine Aussage über die Kurvenform rund um den Peak-Bereich gewonnen. Verlässt der 3dB-Punkt den durch die Grenzen definierten Bereich, so wird ebenfalls ein Alarmbit gesetzt.

Wie dem Blockschaltbild in Figur 2 zu entnehmen ist, ist somit eine Überprüfung 40 der gemittelten Spektren möglich, wobei für die Kohärenzspektren 32 und die Phasenspektren 34 lediglich die Parameter 1 bis 4 aktiviert sind, während für die Amplitudenspektren 28 die Parameter 1 bis 8 aktiviert sind. Die Überwachung 40 auf Grenzwertüberschreitung wird nur auf die für die Archivierung vorgesehenen Amplitudenspektren 28 angewandt. Die aus der Überprüfung der Parameter maximal resultierenden Alarmsignale (Alarmbits) 42 (256 Alarmsignale A₁, 256 Alarmsignale A₂, 1024 Alarmsignale A₃) werden einer Verknüpfungslogik 44 zugeführt, die die Alarmsignale 42 miteinander verknüpft und bei erfüllten Bedingungen zu einer Alarmgebung 46, beispielsweise im eingestellten 300s-Takt, führt.

Es wird deutlich, dass bei den in der Überwachungsebene 12 zum Ansatz kommenden Auswertealgorithmen insbesondere Spektralanalysen und Korrelationen eingesetzt sind.

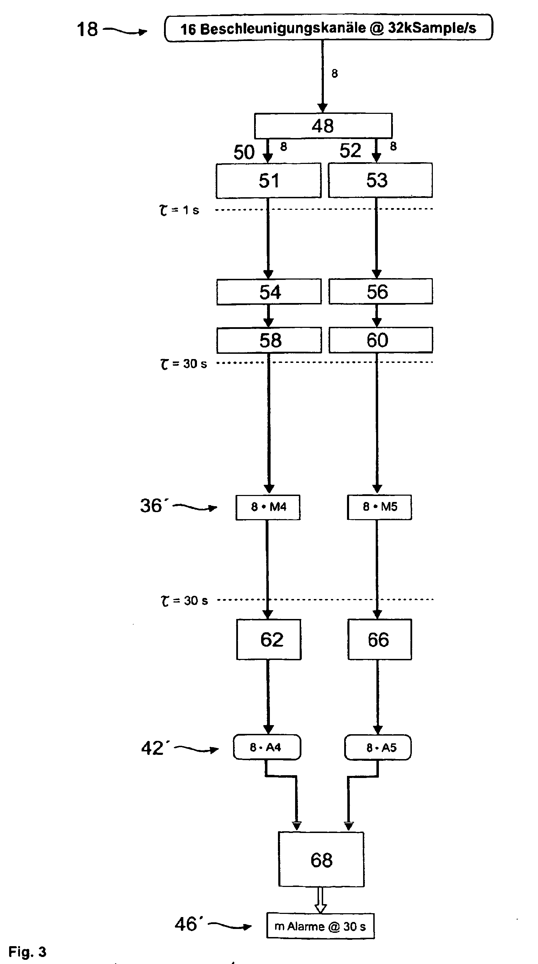

Figur 3 zeigt in einem Blockschaltbild die Auswertealgorithmen der Signale 18 in der Überwachungsebene 14. Als Ausgangssignale liegen wiederum die Beschleunigungssignale einzelner Komponenten der Maschine vor. Hierbei werden vorzugsweise die jeweils vier Signale von überwachten Teilen der Maschine ausgewertet, so dass acht der Beschleunigungssignale 18 zur Auswertung gelangen. Diese werden über einen Filter (Splitter) 48 in zwei Subbänder aufgespalten. Das untere Subband (low) 50 geht über einen Bereich von zum Beispiel 0 bis 400 Hz während das obere Subband (high) 52 den Frequenzbereich von zum Beispiel 0,4 bis 16 kHz abdeckt. Von den in den jeweiligen Subbandern 50 und 52 liegenden Samples wird über eine Zeitspanne von 1 s der Mittelwert und die Varianz (Schritte 51 beziehungsweise 53) berechnet. Hieraus wird dann der jeweilige 1-Sekunden-Kurtosiswert errechnet (Schritte 54 beziehungsweise 56). Diese 1-Sekunden-Kurtosiswerte werden über eine Zeitspanne von 30 s anschließend gemittelt (Schritte 58 beziehungsweise 60). Im Ergebnis dieser Auswertung stehen somit acht Merkmale M₄ (Kurtosiswerte im Low-Subband) und acht Merkmale M₅ (Kurtosiswerte im High-Subband) zur Verfügung. Somit stehen hier weitere sechzehn Merkmale 36' (8 x M₄ + 8 x M₅) zur Verfügung.

Anschließend erfolgt für jeden der gemittelten Kurtosiswerte eine Überprüfung auf das Überschreiten von Grenzwerten (Schritt 62 beziehungsweise 66). Überschreitet einer der Kurtosiswerte den vorgebbaren Grenzwert, kann jeweils ein Alarmbit 42' generiert werden. Somit stehen hier acht Alarmsignale A₄ und acht Alarmsignale A₅ zur Verfügung. Diese werden über eine Verknüpfungslogik 68 geführt, die die Alarmsignale 42' miteinander verknüpft und bei erfüllten Bedingungen zu einer Alarmgebung 46', beispielsweise im eingestellten 30s-Takt, führt.

Es wird deutlich, dass bei den in der Überwachungsebene 14 zum Ansatz kommenden Auswertealgorithmen insbesondere statistische Verfahren, wie beispielsweise Kurtosis, zur Anwendung kommen.

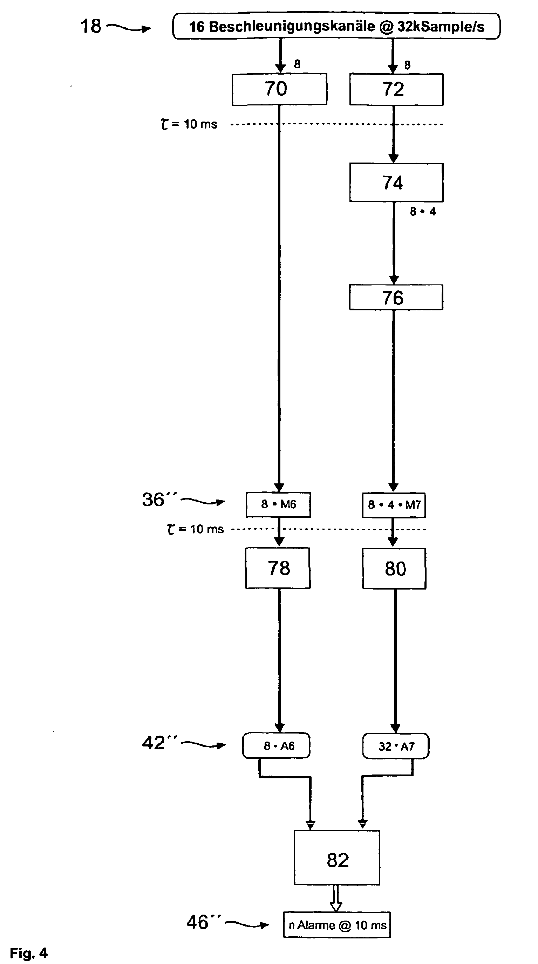

Figur 4 zeigt in einem Blockschaltbild die Auswertealgorithmen der Signale 18 in der Überwachungsebene 16. Als Ausgangssignale liegen wiederum die sechzehn Beschleunigungssignale einzelner Komponenten der Maschine vor. Für acht dieser Beschteunigungssignale erfolgt die Ermittlung eines Crestfaktors und für weitere acht (die gleichen oder die anderen) Beschleunigungssignale eine Histogrammanalyse. Die Signale sind wiederum, wie bei den vorhergehenden Auswertealgorithmen, mit einer Samplefrequenz von 32 kHz gesampelt.

Bei der Ermittlung des Crestfaktors (Schritt 70) erfolgt die Erfassung der Einzelwerte in 10ms-Zeitfenstern, das heißt in Schüben von 320 Einzelwerten. In diesem Zeitfenster wird jeweils der betragsmäßige Spitzenwert und der RMS-Wert ermittelt und der Quotient aus Spitzenwert und RMS-Wert (Crestfaktor) gebildet. Im Ergebnis dieser Auswertung stehen somit acht Merkmale M₆ (entspricht den Crestfaktoren) zur Verfügung.

Parallel erfolgt die Histogrammanalyse (Schritt 72) für acht Beschleunigungssignale, insbesondere für die jeweils vier Signale der überwachten Teile der Maschine. Die Erfassung erfolgt ebenfalls in 10ms-Zeitfenstern, das heißt in Schüben von 320 Werten. Aus diesen 320 Werten pro Zeitfenster wird der größte positive und kleinste negative Wert selektiert (Schritt 74) und in das Histogramm 76 eingetragen. Somit fallen pro 10ms-Zeitfenster je überwachtem Beschleunigungssignal zwei Werte an. Bei der Histogrammanalyse wird die Häufigkeit von bestimmten Beschleunigungswerten in vier Geschwindigkeitsklassen überwacht. Pro Geschwindigkeitsklasse und Signal wird ein Histogramm 76 erstellt.

Durch die Crestfaktoranalyse stehen somit acht Merkmale M₆ und durch die Histogrammanalyse zweiunddreißig Merkmale M₇ zur Verfügung. Somit stehen in der Überwachungsebene 16 insgesamt vierzig Merkmale 36" (8 x M₈ + 32 x M₇) zur Verfügung.

Die einzelnen Merkmale werden auf Überschreitung eines Schwellwertes überwacht. Die infolge der Histogrammanalyse erzielten Merkmale werden auf das Überschreiten eines symmetrischen Schwellwertes überwacht. Dieser symmetrische Schwellwert ist als Parameter einstellbar. Da die Erfassung der Geschwindigkeit in 1s-Schritten erfolgt, gehören jeweils die in diesen 100x10ms-Zeitfenstern erfassten Werte zur gleichen Geschwindigkeitsklasse. Die Beschleunigungswerte werden geschwindigkeitsklassenabhängig in ihrer Größe überwacht. Wird ein einstellbarer Maximalwert überschritten, beziehungsweise wird der Schwellwert des Crestfaktors überschritten, liegt ein Signalalarm vor. Die aus dieser Überprüfung 78 beziehungsweise 80 maximal resultierenden Alarmsignale (Alarmbits) 42" (acht Alarmsignale A₆, zweiunddreißig Alarmsignale A₇) werden einer Verknüpfungslogik 82 zugeführt, die die Alarmsignale 42" miteinander verknüpft und bei erfüllten Bedingungen zu einer Alarmgebung 46", beispielsweise im eingestellten 10ms-Takt, führt.

Es wird deutlich, dass bei den in der Überwachungsebene 16 zum Ansatz kommenden Auswertealgorithmen insbesondere Crestfaktorbeziehungsweise Histogrammanalysen eingesetzt sind.

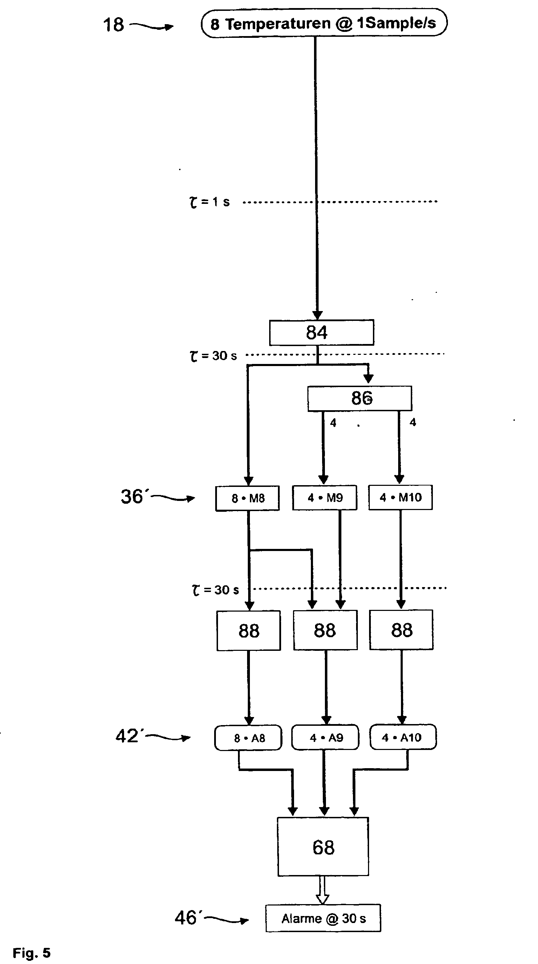

Figur 5 zeigt in einem Blockschaltbild die Auswertealgorithmen der Temperatursignale, die in der Gesamtmenge der Signale 18 zur Verfügung stehen. Die Überwachung der Temperaturen erfolgt in der Überwachungsebene 14, da über die Temperaturüberwachung zum Beispiel so genannte Heißläufer erkannt werden können, die infolge von Lagerschädigungen im Frühstadium entstehen können.

Die der gemessenen Temperatur der einzelnen Lagerhalbschalen entsprechenden Temperatursignale werden in 1s-Schritten erfasst und in einem Zeitfenster von 30 s gemittelt (Schritt 84). Diese somit zur Verfügung stehenden acht gemittelten Temperaturwerte bilden die Merkmale M₈. Ferner werden Differenzen (Schritt 86) zwischen den gemittelten Temperatursignalen eines Lagerbereichs oder einer Lagergruppe und der jeweiligen Temperatur einer einzelnen Lagerhalbschale ermittelt, so dass weitere vier Merkmale M₉ und weitere vier Merkmale M₁₀ jeweils einer Grenztemperatur ΔT = T_{individuell} - Tₘᵢₜₜₑₗ entsprechend zur Verfügung stehen. Somit stehen insgesamt weitere sechzehn Merkmale 36' in der Überwachungsebene 14 zur Verfügung.

Die Merkmale 36' werden anschließend auf eine Grenzwertüberschreitung einer maschinenspezifisch vorgebbaren Maximaltemperatur geprüft. Als weiteres Überwachungskriterium dient die Differenz der Individualtemperatur eines Lagers und der gemittelten Temperatur aller Lagerhalbschalen eines Maschinenteiles, die ebenfalls einen bestimmten Grenzwert nicht überschreiten darf. Die in der Signalverarbeitung ermittelte lagerspezifische Temperaturabweichung ΔT wird auf einen Schwellwert überwacht, der als Parameter einstellbar ist. Ferner ist die spezifische Maximaltemperatur Tₘₐₓ als Alarmparameter programmierbar. Entspechend dieser vorgebbaren Schwellwerte erfolgt die Überprüfung 88 dahingehend, ob die Temperatur Tindividuell > Tmax oder die Temperatur T_{individuell} > Tₘᵢₜₜₑₗ > ΔT_{grenz} ist. Die aus der Überprüfung der Parameter maximal resultierenden Alarmsignale 42' (acht Alarmsignale A₈, vier Alarmsignale A₉, vier Alarmsignale A₁₀) werden der Verknüpfungslogik 68 zugeführt, die die Alarmsignale miteinander verknüpft und bei erfüllten Bedingungen zu einer Alarmgebung 46, beispielsweise im eingestellten 30s-Takt, führt

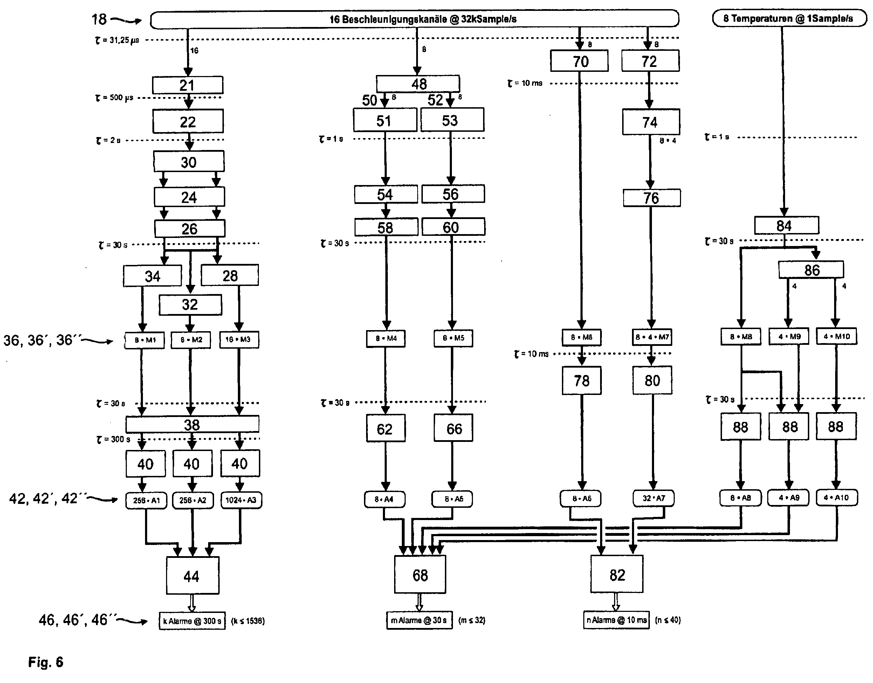

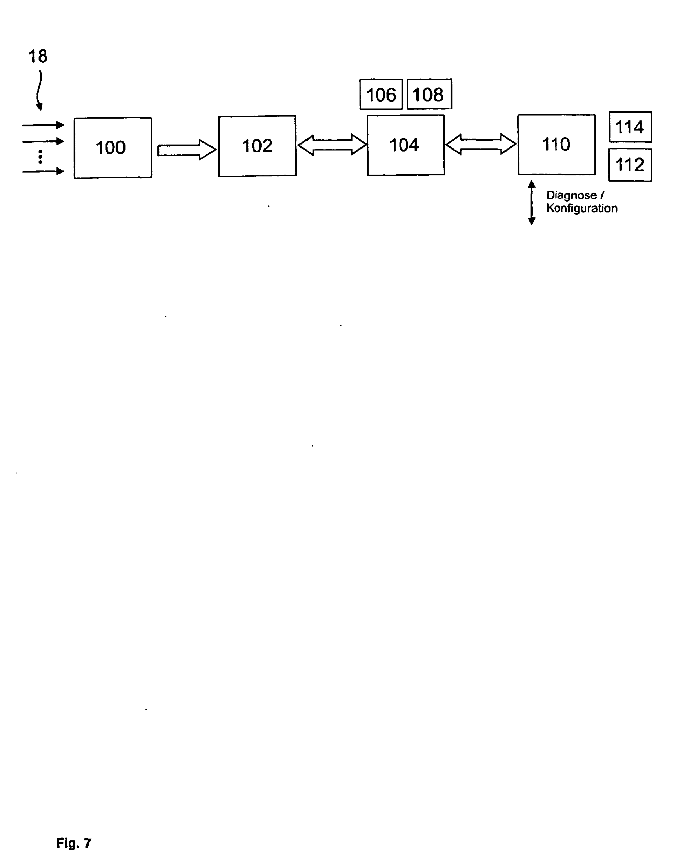

Figur 6 zeigt in einem Blockschaltbild das gesamte Überwachungssystem 10 mit den Auswertealgorithmen in den Überwachungsebenen 12, 14 und 16. Insgesamt ergibt sich somit folgende zusammengefasste Signalverarbeitung beziehungsweise Ermittlung von Merkmalen. Alarmbits und über die Verknüpfungslogiken ausgelöste Alarme. Im Einzelnen sind diese Vorgehensweisen bereits anhand der vorhergehenden Figuren erläutert worden.
Die Zusammenstellung in Figur 7 setzt sich aus den bereits beschriebenen Diagnoseaufgaben der Figuren 3 bis 6 zusammen und zeigt nochmals die gewählte Form des Meldekonzepts über logische Verknüpfungen in den drei unterschiedlichen Signalverarbeitungs-Szenarien mit an die Aufgabenstellung angepassten Reaktionszeiten.

Die Überprüfung auf Grenzwertverletzungen erfolgt bei der Frequenzbereichsüberwachung nach erfolgter Spektrenselektion in einstellbaren Zeitfenstern (120 beziehungsweise 180/240/300/360 Sekunden). Angewandt wird die Überwachung auf sechzehn Beschleunigungssignale sowie acht Kohärenz- und Phasenkombinationen je Maschine, Maschinenbereich oder Maschinenteil. Bei den Amplitudenspektren sind acht Überwachungsbänder und acht Parameter (2 x Amplitude, 2 x Frequenz, 4 x Dämpfung), das heißt 1024 Alarmbits pro Maschine, bei den Kohärenz-/Phasensignalen (2 x Amplitude / 2 x Frequenz) entsprechend 256 Alarmbits pro Maschine vorhanden. Maximal können bei der Frequenzüberwachung acht frei wählbare Alarmbits verknüpft werden und lösen nach Abprüfung durch ein Zeitglied eine externe Alarmgebung aus. Das Zeitglied stellt sicher, dass nur Ober das Verknüpfungsergebnis zweier aufeinander folgender abgespeicherter Messungen (Spektrenermittlungen) eine Alarmbedingung erfüllt ist, um einen Alarm nach extern weiterzugeben.

Bei der Messdatenerfassung im Zeitbereich erfolgt die Datenerfassung und Signalalarmüberprüfung für Histogramm und Crestfaktor alle 10 ms. Angewandt wird diese Vorgehensweise auf die acht Lagersignale einer Maschine. Pro Maschine werden vierzig Alarmbits gesetzt.

Bei der Kurtosisüberwachung stehen alle 30 Sekunden neue Wertepaare zur Überwachung bereit. Bei Anwendung auf die beiden Frequenzbereiche (high/low) der acht Lagersignale einer Maschine stehen sechzehn Alarmbits zur Verfügung.

Im direkten Zusammenhang mit der Lagerschwingungsüberwachung mittels Kurtosis steht die Überwachung der Lagertemperaturen. Jede Lagertemperatur wir auf zwei Alarmbedingungen hin abgeprüft (Tₘₐₓ und ΔT_{granze}). Somit stehen pro Maschine sechzehn Alarmbits zur Verfügung. Das Ergebnis der Lagertemperaturüberwachung liegt dabei ebenfalls im 30s-Zeittakt wie die Kurtosisüberwachung vor, das heißt, bei der Verknüpfung von Kurtosis und Temperaturalarmen wird keine Verwaltung unterschiedlicher Zeittakte notwendig. Die ermittelten Alarmbits werden in ein Kurtosis-Temperatur-Signalalarmfile geschrieben, welches alle 30 Sekunden aktualisiert wird. Die Signalalarme werden im Logikeditor verknüpft und führen bei erfüllter Bedingung zur Alarmgebung.

Figur 7 zeigt schematisch den Aufbau des Überwachungssystems 10. Das Überwachungssystem 10 ist modular aufgebaut, so dass eine separate Inbetriebnahme (der einzelnen Überwachungsebenen 12, 14 und 16) sowie ein schneller Austausch einzelner der Komponenten sowie die Möglichkeit einer individuellen Anpassung an andere Bedingungen möglich ist. Die Signale 18 der nicht dargestellten Sensoren werden über eine Signalkonditionierung 100 an die Eingangsbereiche von Analog/Digital-Umsetzern 102 angepasst. Die Analog/Digital-Umsetzer 102 sind entsprechend der erforderlichen Kanalanzahl der zu verarbeitenden Signale und der Umsetzrate von 32 Samples pro Sekunde realisiert. Die Analog/Digital-Umsetzer sind an einen digitalen Signalprozessor (DSP) 104 angeschlossen, in dem die Signalverarbeitung beziehungsweise - bearbeitung, die Merkmalsextraktion, die Grenzwertevergleiche sowie die Alarmgebung - entsprechend der Erläuterung zu den vorhergehenden Figuren - realisiert ist. Dem digitalen Signalprozessor 104 ist ein Flash-Speicher 106 zum Laden des Programmes und ein externer Speicher 108 zum Ablegen der Daten zugeordnet. Die Ablaufsteuerung des digitalen Signalprozessors 104 erfolgt durch ein Rechensystem 110, dem für eine temporäre Speicherung der Messdaten eine Flash-Speicherdisc 112 zugeordnet ist. Ferner ist dem Rechensystem 110 ein Festplattenspeicher 114 zugeordnet. Durch diese Ausstattung wird ermöglicht, während des bestimmungsgemäßen Einsatzes der Maschine die Daten während der Fahrt auf den Flash-Speicher 112 zu schreiben und erst im Stillstand der Maschine eine Umschreibung der Daten (Kopieren) auf den Festplattenspeicher 114 vorzunehmen. Hierdurch wird die Datensicherheit des Überwachungssystems 10 erhöht. Die Größe des Flash-Speichers 112 muss hierbei der maximalen Laufzeit der Maschine angepasst sein und kann nach jedem erfolgten Überspielen auf den Festplattenspeicher 114 neu beschrieben werden.

Es wird deutlich, dass durch die Systemlösung ein sicherer Betrieb des Überwachungssystems 10 unter Einhaltung erhöhter Anforderungen an Robustheit, Stabilität und Energieeffizienz möglich ist.

## Patentansprüche

1. Verfahren zum Überwachen des Verhaltens von stationären Maschinen und Maschinenanlagen insbesondere von Kraftwerken und Windkraftanlagen und der Diagnose von Komponenten von Maschinen und Maschinenanlagen, wobei gleiche und/oder unterschiedliche Betriebsparameter der Maschine/Maschinenanlage beziehungsweise von Komponenten der Maschine/Maschinenanlage während deren Einsatz erfasst und ausgewertet werden, **dadurch gekennzeichnet, dass** in Abhängigkeit der Zuordnung zu Überwachungsebenen (12, 14, 16) einer Überwachungshierarchie, zur Erzielung das Verhalten charakterisierender, ereignisabhängiger Aussagen, die Betriebsparameter wenigstens einer Überwachungsebene zugeführt werden, wobei je nach Zuordnung zu einer der Überwachungsebenen (12, 14 ,16) die Betriebsparameter in den Überwachungsebenen (12, 14, 16) gleichen und/oder unterschiedlichen Auswertealgorithmen unterzogen werden, wobei in einer ersten Überwachungsebene (12) die den Betriebsparametern entsprechenden Signale Frequenzauswerteverfahren, insbesondere Spektralanalysen, Korrelationen oder dergleichen, unterzogen werden und in einer zweiten Überwachungsebene (14) die den Betriebsparametern entsprechenden Signale statistischen Auswerteverfahren, insbesondere Kurtosiswertermittlungen, unterzogen werden, und wobei in den Überwachungsebenen zugeordnete Meldungen (12', 14', 16') beziehungsweise Aktionen generiert werden.

2. Verfahren nach Anspruch 1, **dadurch gekennzeichnet,dass** die wenigstens zwei Betriebsparameter, die gleich oder unterschiedlich sein können, innerhalb einer Überwachungsebene miteinander verknüpft werden.

3. Verfahren nach einem der vorhergehenden Ansprüche, **dadurch gekennzeichnet, dass** drei Überwachungsebenen (12, 14, 16) vorgesehen sind.

4. Verfahren nach einem der vorhergehenden Ansprüche, **dadurch gekennzeichnet, dass** in der ersten Überwachungsebene (12) allgemeine Diagnosen zur Erfassung von Schäden, Fehlern oder dergleichen durchgeführt werden.

5. Verfahren nach einem der vorhergehenden Ansprüche, **dadurch gekennzeichnet, dass** in der zweiten Überwachungsebene (14) zu Ausfällen und/oder fehlerhaften Produktionen führende fortgeschrittene Schäden, Fehler oder dergleichen erkannt werden.

6. Verfahren nach einem der vorhergehenden Ansprüche, **dadurch gekennzeichnet, dass** in der dritten Überwachungsebene (16) ein Aggregatschutz erfolgt.

7. Verfahren nach Anspruch 6, **dadurch gekennzeichnet, dass** in der Überwachungsebene (16) die den Betriebsparametern entsprechenden Signale Zeitauswerteverfahren, insbesondere Crestfaktor- und Histogrammanalyse, unterzogen werden.

8. Verfahren nach einem der vorhergehenden Ansprüche, **dadurch gekennzeichnet, dass** als Betriebsparameter Beschleunigungssignate von Komponenten der Maschinen/Maschinenanlage, Temperatursignale von Komponenten der Maschine/Maschinenanlage, ein Ist-Drehzahlsignal der Maschine/Maschinenanlage, eine Laufleistung der Maschine/Maschinenanlage erfasst werden.

9. Verfahren nach einem der vorhergehenden Ansprüche, **dadurch gekennzeichnet, dass** die Auswertung der Betriebsparameter in den unterschiedlichen Überwachungsebenen mit einer unterschiedlichen Zeitdauer erfolgt.

10. Verfahren nach einem der vorhergehenden Ansprüche, **dadurch gekennzeichnet, dass** alle in einer Überwachungsebene (12, 14, 16) auftretenden Fehlersignale jeweils einer Verknüpfungslogik (44, 68, 82) zur Gewinnung von Alarmmeldungen (12', 14', 16') zugeführt werden.

11. Verfahren nach einem der vorhergehenden Ansprüche, **dadurch gekennzeichnet, dass** eine Mindestdrehzahl der Maschine/Maschinenanlage als Führungsgröße fungiert.

12. Verfahren nach einem der vorhergehenden Ansprüche, **dadurch gekennzeichnet, dass** die Signale, die Auswertungen und/oder die Meldungen über eine wählbare Zeitspanne gespeichert werden.

13. Verfahren nach Anspruch 12, **dadurch gekennzeichnet, dass** die Speicherung der Daten während des Laufs der Maschine/Maschinenanlage auf einem Zwischenspeicher erfolgt und bei Stillstand der Maschine/Maschinenanlage die Daten auf einem Festplattenspeicher oder dergleichen umgeschrieben werden.

14. Vorrichtung zum Überwachen des Verhaltens von stationären Maschinen/Maschinenanlagen und der Diagnose von Komponenten von Maschinen/Maschinenanlagen, zur Durchführung des Verfahrens nach einem der vorherigen Ansprüche mit ersten Mitteln zum Erfassen von Betriebsparametern der Maschine/Maschinenanlage beziehungsweise von Komponenten der Maschine/Maschinenanlage, **gekennzeichnet durch** zweite Mittel zum Zuordnen der Betriebsparameter zu verschiedenen Überwachungsebenen (12, 14, 16) eines Überwachungssystems (10), wobei in Abhängigkeit der Zuordnung zu Überwachungsebenen (12, 14, 16) einer Überwachungshierarchie, zur Erzielung das Verhalten charakterisierender, ereignisabhängiger Aussagen, die Betriebsparameter wenigstens einer Überwachungsebene zugeführt werden,
und dritte Mittel, mittels derer je nach Zuordnung zu einer der Überwachungsebenen (12, 14, 16) die Betriebsparameter in den Überwachungsebenen (12, 14, 16) gleichen und/oder unterschiedlichen Auswertealgorithmen unterzogen werden können, wobei in einer ersten Überwachungsebene (12) die den Betriebsparametern entsprechenden Signale Frequenzauswerteverfahren, insbesondere Spektralanalysen, Korrelationen oder dergleichen, unterzogen werden können und in einer zweiten Überwachungsebene (14) die den Betriebsparametern entsprechenden Signale statistischen Auswerteverfahren, insbesondere Kurtosiswertermittlungen, unterzogen werden können,
sowie vierte Mittel zum Generieren von der Auswertung in den Überwachungsebenen (12, 14, 16) zugeordneten Meldungen (12', 14', 16') beziehungsweise Aktionen.

## Claims

1. Method for monitoring the behaviour of stationary machines and machine installations, in particular that of power stations and wind power stations, and for the diagnosis of components of machines and machine installations, wherein the same and/or different operating parameters of the machine/machine installation or of components of the machine/machine installation are recorded and evaluated during their use, **characterised in that** the operating parameters of at least one monitoring level are assigned to a monitoring hierarchy, dependent on the assignment to monitoring levels (12, 14, 16), so that event-dependent statements characterising the behaviour can be made, wherein, according to the assignment to one of the monitoring levels (12, 14, 16) the operating parameters at the monitoring levels (12, 14, 16) are subjected to the same and/or different evaluation algorithms, wherein, at a first monitoring level (12), the signals corresponding to the operating parameters are subjected to frequency evaluation processes, in particular spectral analyses, correlations or the like, and at a second monitoring level (14) the signals corresponding to the operating parameters are subjected to statistical evaluation processes, in particular Kurtosis value determinations, and wherein at the monitoring levels assigned messages (12', 14', 16') or actions are generated.

2. Method according to Claim 1, **characterised in that** at least two operating parameters, which may be the same or different, are interlinked within one monitoring level.

3. Method according to one of the preceding claims, **characterised in that** three monitoring levels (12, 14, 16) are provided.

4. Method according to one of the preceding claims, **characterised in that** at the first monitoring level (12) general diagnoses are carried out to record damage, faults or the like.

5. Method according to one of the preceding claims, **characterised in that** at the second monitoring level (14) progressive damage, faults or the like leading to failures and/or defective productions can be detected.

6. Method according to one of the preceding claims, **characterised in that** at the third monitoring level (16) an aggregate protection is provided.

7. Method according to Claim 6, **characterised in that** at the monitoring level (16) the signals corresponding to the operating parameters are subjected to time evaluation processes, in particular crest factor and histogram analysis.

8. Method according to one of the preceding claims, **characterised in that** acceleration signals of components of the machines/machine installation, temperature signals of components of the machine/machine installation, an actual sped signal of the machine/machine installation and a performance of the machine/machine installation are recorded as operating parameters.

9. Method according to one of the preceding claims, **characterised in that** the operating parameters at the different monitoring levels are evaluated on the basis of a different period of time.

10. Method according to one of the preceding claims, **characterised in that** all error signals occurring at one monitoring level (12, 14, 16) are each assigned to a gate logic (44, 68, 82) for obtaining alarm messages (12', 14', 16').

11. Method according to one of the preceding claims, **characterised in that** a minimum speed of the machine/machine installation acts as a guide value.

12. Method according to one of the preceding claims, **characterised in that** the signals, the evaluations and/or the messages are stored over an optional length of time.

13. Method according to Claim 12, **characterised in that** the data are stored in an intermediate memory during the operation of the machine/machine installation, and **in that** the data are rewritten on a fixed-disc device whilst the machine/machine installation is stationary.

14. Device for monitoring the behaviour of stationary machines/machine installations and for diagnosing components of machines/machine installations, for carrying out the process according to one of the preceding claims, with first means for recording operating parameters of the machine/machine installation or of components of the machine/machine installation, **characterised by** second means for assigning the operating parameters to different monitoring levels (12, 14, 16) of a monitoring system (10), wherein the operating parameters are assigned to at least one monitoring level, depending on the assignment to monitoring levels (12, 14, 16) of a monitoring hierarchy, so that event-dependent statements characterising the behaviour can be made,
by third means by means of which, according to the assignment to one of the monitoring levels (12, 14, 16), the operating parameters at the monitoring levels (12, 14, 16) may be subjected to the same and/or different evaluation algorithms, wherein at a first monitoring level (12) the signals corresponding to the operating parameters may be subjected to frequency evaluation processes, in particular spectral analyses, correlations or the like, and at a second monitoring level (14) the signals corresponding to the operating parameters may be subjected to statistical evaluation processes, in particular Kurtosis value determinations,
and by fourth means for generating messages (12', 14', 16') or actions assigned to the evaluation at the monitoring levels (12, 14, 16).

## Revendications

1. Procédé de surveillance du comportement de machines et d'installations de machines stationnaires, en particulier de centrales électriques et d'installations éoliennes, et de diagnostic de composants de machines et installations de machines, des paramètres de fonctionnement égaux et/ou différents de la machine/installation de machine ou de composants de la machine/installation de machine étant détectés et évalués pendant l'utilisation de cette dernière, **caractérisé en ce que**, en fonction de l'affectation à des niveaux de surveillance (12, 14, 16) d'une hiérarchie de surveillance, pour l'obtention d'informations dépendantes d'évènements, caractéristiques du comportement, les paramètres de fonctionnement sont transmis à au moins un niveau de surveillance, les paramètres de fonctionnement étant soumis dans les niveaux de surveillance (12, 14, 16), suivant l'affectation à l'un de ces niveaux (12, 14, 16), à des algorithmes d'évaluation égaux et/ou différents, les signaux correspondants aux paramètres de fonctionnement étant soumis dans un premier niveau de surveillance (12) à des procédés d'évaluation de fréquences, en particulier analyses spectrales, corrélations ou autres, les signaux correspondants aux paramètres de fonctionnement étant soumis dans un deuxième niveau de surveillance (14) à des procédés d'évaluation statistiques, en particulier déterminations de valeurs d'aplatissement, et des messages (12', 14', 16') ou actions associés étant générés dans les niveaux de surveillance.

2. Procédé suivant la revendication 1, **caractérisé en ce que** les au moins deux paramètres de fonctionnement, qui peuvent être égaux ou différents, sont enchaînés entre eux à l'intérieur d'un niveau de surveillance.

3. Procédé suivant l'une des revendications précédentes, **caractérisé en ce que** trois niveaux de surveillance (12, 14, 16) sont prévus.

4. Procédé suivant l'une des revendications précédentes, **caractérisé en ce que** des diagnostics généraux pour la détection de dommages, défauts ou autres, sont effectués dans le premier niveau de surveillance (12).

5. Procédé suivant l'une des revendications précédentes, **caractérisé en ce que** des dommages, défauts ou autres, avancés, provoquant des défaillances et/ou des productions défectueuses, sont identifiés dans le deuxième niveau de surveillance (14).

6. Procédé suivant l'une des revendications précédentes, **caractérisé en ce qu'**une protection de groupe est assurée dans le troisième niveau de surveillance (16).

7. Procédé suivant la revendication 6, **caractérisé en ce que** les signaux correspondants aux paramètres de fonctionnement sont soumis dans le niveau de surveillance (16) à des procédés d'évaluation de temps, en particulier analyses du facteur de crête et d'histogramme.

8. Procédé suivant l'une des revendications précédentes, **caractérisé en ce que** des signaux d'accélération de composants de la machine/installation de machine, des signaux de température de composants de la machine/installation de machine, un signal de vitesse de rotation effective de la machine/installation de machine, une puissance de fonctionnement de la machine/installation de machine, sont détectés en tant que paramètres de fonctionnement.

9. Procédé suivant l'une des revendications précédentes, **caractérisé en ce que** l'évaluation des paramètres de fonctionnement dans les niveaux de surveillance différents s'effectue avec une durée dans le temps différente.

10. Procédé suivant l'une des revendications précédentes, **caractérisé en ce que** tous les signaux de défauts produits dans un niveau de surveillance (12, 14, 16) sont transmis chacun à une logique d'enchaînement (44, 68, 82) pour l'obtention de messages d'alarme (12', 14', 16').

11. Procédé suivant l'une des revendications précédentes, **caractérisé en ce qu'**une vitesse de rotation minimale de la machine/installation de machine fait office de grandeur de référence.

12. Procédé suivant l'une des revendications précédentes, **caractérisé en ce que** les signaux, les évaluations et/ou les messages sont mémorisés sur un laps de temps sélectif.

13. Procédé suivant la revendication 12, **caractérisé en ce que** la mémorisation des données s'effectue pendant le fonctionnement de la machine/installation de machine sur une mémoire intermédiaire et les données sont transcrites sur une mémoire à disques fixes ou autres à l'arrêt de la machine/installation de machine.

14. Dispositif de surveillance du comportement de machines/installations de machines stationnaires et de diagnostic de composants de machines/installations de machines, pour la mise en oeuvre du procédé suivant l'une des revendications précédentes, comprenant des premiers moyens de détection de paramètres de fonctionnement de la machine/installation de machine et/ou de composants de la machine/installation de machine, **caractérisé par** des deuxièmes moyens d'affectation des paramètres de fonctionnement à différents niveaux de surveillance (12, 14, 16) d'un système de surveillance (10), les paramètres de fonctionnement étant transmis, en fonction de l'affectation aux niveaux de surveillance (12, 14, 16) d'une hiérarchie de surveillance, pour l'obtention d'informations dépendantes d'évènements, caractéristiques du comportement, à au moins un niveau de surveillance,
et par des troisièmes moyens à l'aide desquels, selon l'affectation à l'un des niveaux de surveillance (12, 14, 16), les paramètres de fonctionnement peuvent être soumis dans les niveaux de surveillance (12, 14, 16) à des algorithmes d'évaluation égaux et/ou différents, les signaux correspondants aux paramètres de fonctionnement pouvant être soumis dans un premier niveau de surveillance (12) à des procédés d'évaluation de fréquences, en particulier analyses spectrales, corrélations ou autres, et les signaux correspondants aux paramètres de fonctionnement pouvant être soumis dans un deuxième niveau de surveillance (14) à des procédés d'évaluation statistiques, en particulier déterminations de valeurs d'aplatissement,
ainsi que par de quatrièmes moyens pour générer des messages (12', 14', 16') ou actions associés à l'évaluation dans les niveaux de surveillance (12, 14, 16).
